Europäisches Patentamt

European Patent Office

Office européen des brevets

(19)

(11) Veröffentlichungsnummer: **0 038 436**

**A1**

(12) **EUROPÄISCHE PATENTANMELDUNG**

(21) Anmeldenummer: **81102347.2**

(22) Anmeldetag: **27.03.81**

(51) Int. Cl.³: **G 11 B 5/11**
//G11B15/62

(30) Priorität: **17.04.80 DE 3014855**

(43) Veröffentlichungstag der Anmeldung:
**28.10.81 Patentblatt 81/43**

(84) Benannte Vertragsstaaten:
**AT BE CH FR GB IT LI LU NL SE**

(71) Anmelder: **SIEMENS AKTIENGESELLSCHAFT Berlin
und München**
**Postfach 22 02 61**
**D-8000 München 22(DE)**

(72) Erfinder: **Geyer, Jürgen, Ing.grad**
**Atlingerstrasse 21**
**D-8031 Puchheim(DE)**

(54) **Anordnung zum Verringern des Übersprechens benachbarter Magnetkopfsysteme eines Schreib-Lesekopfes.**

(57) In einem Gehäuse (7) drehsicher geführter Stößel (6), an dessen einem Ende eine Abschirmplatte (3,4,8) angeordnet ist und der an seinem anderen Ende mit einer Membran (9) verbunden ist, die ihrerseits mit Hilfe eines Deckels (10) so mit dem Gehäuse (7) fest verbunden ist, daß zwei luftdicht voneinander getrennte Kammern (11,12) gebildet werden.

Die Anordnung dient bei einem Magnetbandgerät zum Verringern des Übersprechens benachbarter Magnetköpfsysteme eines Schreib/Lesekopfes.

FIG 2

EP 0 038 436 A1

Croydon Printing Company Ltd.

0038436

SIEMENS AKTIENGESELLSCHAFT

Berlin und München

Unser Zeichen

VPA 80 P 2 0 4 0 E

Anordnung zum Verringern des Übersprechens benachbarter Magnetkopfsysteme eines Schreib-Lesekopfes.

Die Erfindung bezieht sich auf eine Anordnung zum Verringern des Übersprechens benachbarter Magnetkopfsysteme eines Schreib-Lesekopfes mit einer gegenüber dem Magnetkopf bewegbaren Abschirmplatte.

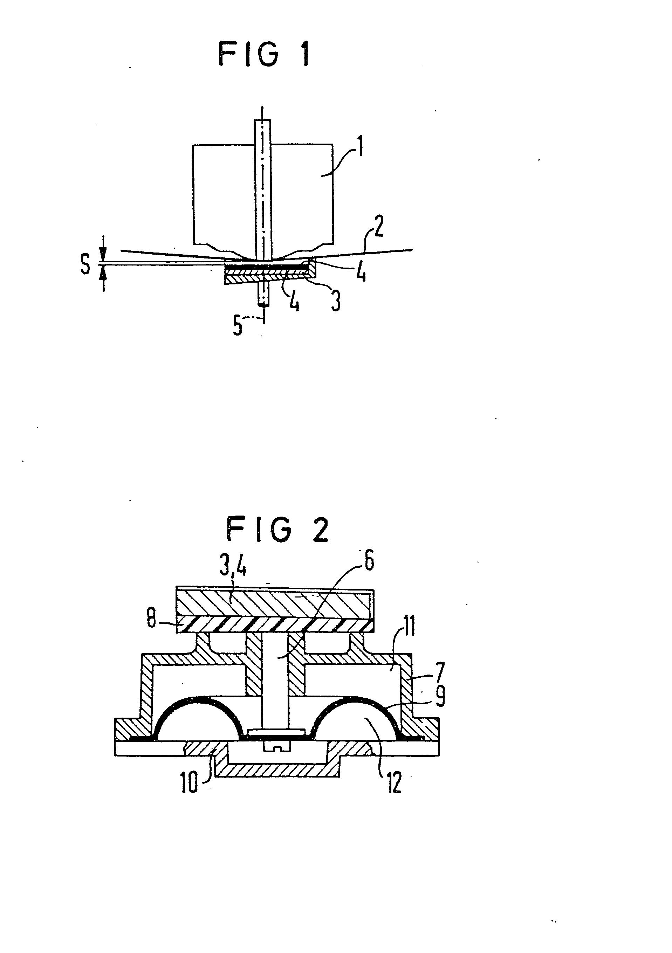

Um das Übersprechen benachbarter Kopfsysteme eines Schreib-Lese-Magnetkopfes (1) für ein Magnetbandgerät auf ein zulässiges Maß zu reduzieren, ist eine sogenannte Abschirmplatte (3) notwendig. Sie besteht z.B. aus zwei auf einem Ferritkörper aufgeklebten Kupferblechen (4). In der Betriebsstellung ist die Platte so angeordnet, daß zwischen ihr und dem Kopfspiegel ein paralleler Spalt (S) bleibt, damit das am Magnetkopf (1) vorbeigleitende Magnetband (2) nicht behindert wird. Ferner sollen die beiden Kupferbleche (4) zur Magnetkopfsystemachse (5) symmertrisch angeordnet sein (Fig.1).

An das Antriebssystem für eine solche Abschirmplatte werden folgende Anforderungen gestellt:
Der Abstand Abschirmplatte-Magnetkopf soll in der Ruhestellung ein Maximum haben. Die Abschirmplatte ist deshalb zu wählbaren Zeitpunkten auf einen minimalen, zum Magnetkopf parallelen Abstand zu bringen.

Bislang wurde z.B. ein Abschirmkörper von einem Antriebsorgan über ein präzis gelagertes Hebelwerk in den Arbeitsbereich gebracht und dort auf Abstand gehalten.

Kar 1 Pe / 16.4.1980

0038436

80 P 2040 E

Nachteile dieser Lösung sind der voluminöse Hebelaufbau mit der aufwendigen Lagerung, das dazu notwendige große Antriebsorgan und die aufwendig zu montierende kardanisch aufgehängte Abschirmplatte.

Der Erfindung lag daher die Aufgabe zugrunde, eine Anordnung der oben genannten Art zu schaffen, die bei Vermeidung der Nachteile der bekannten Lösung mit wenigen, einfachen Teilen auskommt und wegen der unmittelbaren Nähe des Magnetbandes nicht von einem elektromagnetischen Antrieb Gebrauch macht.

Diese Aufgabe wird erfindungsgemäß durch eine Anordnung gelöst mit einem in einem Gehäuse drehsicher geführten Stößel, an dessen einem Ende die Abschirmplatte angeordnet ist und der an seinem anderen Ende mit einer Membran verbunden ist, die ihrerseits mit Hilfe eines Deckels so mit dem Gehäuse fest verbunden ist, daß zwei luftdicht voneinander getrennte Kammern gebildet werden.

Die erfindungsgemäße Anordnung weist folgende Vorteile auf: Die zu bewegende Masse ist sehr gering, da die Anordnung nur noch aus sehr wenigen leichten Teilen besteht. Weiterhin verursacht der zentrale Kraftantriebspunkt am Stößel wenig Gleitreibung, so daß für den Antrieb nur eine geringe Kraft notwendig ist, was eine Miniaturisierung der Teile ermöglicht. Außerdem haben die durch die Membran abgedichteten Kammern des Gehäuses keinen Luftverlust. Es wird deshalb nur ein relativ kleiner Strömungsquerschnitt benötigt, um eine sicher steuerbare Bewegung von Membran, Stößel und Abschirmplatte zu erzielen.

Figur 2 zeigt ein Ausführungsbeispiel der erfindungsgemässen Anordnung im Querschnitt.

0038436

80 P 2040 E

Kernstück des neuen Antriebsmechanismus ist ein membranangetriebener Stößel (6). In einem Gehäuse (7) drehgesichert geführt, trägt er z.B. eine Kunststoffwanne (8), in welche eine an sich bekannte kardanische Aufhängung integriert werden kann. Letztere kann z.B. durch eingearbeitete Stege in der Bodenfläche gebildet werden. In der Kunststoffwanne (8) ist die Abschirmplatte (3,4) angeordnet. Eine Membrane (9) ist mit einem Deckel (10) fest mit dem Gehäuse (7) verbunden. Die Kammern (11) und (12) sind somit luftdicht voneinander getrennt. Die Membrane (9) ist federnd ausgebildet, so daß sie mit einer bestimmten Kraft die mit ihr verbundene Abschirmplatte (3,4) dauernd in die Ruhestellung zurückzieht.

Die Federung wird durch den hutförmigen Querschnitt erzielt, wobei der kreisbogenförmige Haubenring das Abrollen in axialer Bewegungsrichtung begünstigt. Die Federkonstante ist eine Funktion der Materialhärte bei gleicher Materialstärke.

Wird nun aus der Kammer (11) die Luft herausgesaugt oder in die Kammer (12) Luft hineingeblasen, dann wird der Stößel in Richtung Magnetkopf bewegt. Der Anschlag kann z.B. durch den Magnetkopf gebildet werden, an dem die Kanten der Kunststoffwanne zur Anlage kommen. Ein notwendiger Freiraum zwischen Magnetkopf und Kopfabschirmung (3,4) kann durch die Ausbildung der Anlagekanten gegeben werden. Wird die Kammer (10) be- bzw. die Kammer (12) entlüftet, dann stellt die Federkraft der Membrane (9) die Kopfabschirmung in die Ruhestellung zurück.

4 Patentansprüche
2 Figuren

0038436

## Patentansprüche

1. Anordnung zum Verringern des Übersprechens benachbarter Magnetkopfsysteme eines Schreib-Lesekopfes mit einer gegenüber dem Magnetkopf bewegbaren Abschirmplatte, g e k e n n - z e i c h n e t durch einen in einem Gehäuse (7) drehsicher geführten Stößel (6), an dessen einem Ende die Abschirmplatte (3,4;8) angeordnet ist und der an seinem anderen Ende mit einer Membran (9) verbunden ist, die ihrerseits mit Hilfe eines Deckels (10) so mit dem Gehäuse (7) fest verbunden ist, daß zwei luftdicht voneinander getrennte Kammern (11,12) gebildet werden.

2. Anordnung nach Anspruch 1, g e k e n n z e i c h n e t durch eine federnd ausgebildete Membran (9).

3. Anordnung nach Anspruch 2, g e k e n n z e i c h n e t durch einen hutförmigen Querschnitt der Membran (9).

4. Anordnung nach einem der Ansprüche 1 bis 3, d a d u r c h g e k e n n z e i c h n e t, daß Gehäuse (7), Deckel (10) und Membran (9) kreisförmig ausgebildet sind und der Stößel (6) mit der Mitte der Membran verbunden ist.

FIG 1

FIG 2

# Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 518 647 (ALTONJI et al.) <br> * Spalte 3, Zeile 29 - Spalte 4, Zeile 14; Spalte 5, Zeilen 3-20; Figuren 1,3,5,6,7 * | 1,2,4 |
| | -- | |
| | US - A - 4 158 870 (YSBRAND et al.) <br> * Spalte 2, Zeile 56 - Spalte 4, Zeile 2; Figuren 1 und 2 * | 1,4 |
| | -- | |
| | PATENTS ABSTRACTS OF JAPAN, Band 3, Nr. 127, 23 Oktober 1979, Seite 141E146 <br> & JP - A - 54 105505 (NIPPON DENKI) 18 August 1979 <br> * Zusammenfassung * | 1-4 |
| | -- | |
| A | US - A - 3 747 938 (VAN DER HILST et al.) <br> * Spalte 1, Zeilen 55-64; Spalte 2, Zeilen 11-28, 49 - Spalte 3, Zeile 3; Zeilen 16-19; die Figur * <br> & DE - A - 2 054 708 | 1-3 |
| | -- | |
| A | US - A - 3 329 434 (WALKER) <br> * Spalte 2, Zeilen 39-64; Figuren 2,3,4,5 * | 1 |
| | -- | |
| A | US - A - 3 785 251 (PAIGE) <br> * Spalte 2, Zeile 37 - Spalte 3, Zeilen 11, 35-44; Spalte 4, Zeilen 5,6; Spalte 5, Zeilen 12-28; Figuren 1,2 * | 1-4 |
| | -- | ./. |

**KLASSIFIKATION DER ANMELDUNG (Int. Cl.3)**

G 11 B 5/11//
G 11 B 15/62

**RECHERCHIERTE SACHGEBIETE (Int. Cl.3)**

G 11 B 5
G 11 B 15

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23-07-1981 | FUX |

EPA form 1503.1 06.78

Europäisches
Patentamt

**EUROPÄISCHER RECHERCHENBERICHT**

| Kategorie | Kennzeichnung des Dokuments mit Angabe, soweit erforderlich, der maßgeblichen Teile | betrifft Anspruch |
|---|---|---|
| A | US - A - 3 749 851 (NAKAMICHI)<br><br> * Spalte 1, Zeile 55 - Spalte 2, Zeile 17; Spalte 3, Zeilen 24-36; Figuren 1,2 * | 1 |
| A | GB - A - 1 105 535 (SIEMENS)<br><br> * Seite 3, Zeilen 86-113; Figur 6 *<br><br>& DE - A - 1 449 866 | 1 |

**EINSCHLÄGIGE DOKUMENTE**

KLASSIFIKATION DER ANMELDUNG (Int.Cl. 3)

RECHERCHIERTE SACHGEBIETE (Int. Cl. 3)

EPA Form 1503.2  06.78